# EUROPÄISCHE PATENTANMELDUNG

(11) **EP 1 468 817 A1**
(43) Veröffentlichungstag der Anmeldung: **20.10.2004**
(21) Anmeldenummer: 03405269.6
(22) Anmeldetag: 16.04.2003
(51) Int. Cl.: B32B 15/08, B32B 27/30, B65D 75/36, B32B 27/32, B32B 27/36

(54) **Deckfolie für Blisterverpackungen**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Eine Deckfolie für thermo- und kaltgeformte Blister zur kindersicheren und seniorenfreundlichen Verpackung von Medikamenten und medizinischen Produkten besteht aus einer 5 bis 30 µm dicken Aluminiumfolie, die auf einer ersten Seite
- unbeschichtet ist, oder
- mit einem Schutzlack mit einem Auftragsgewicht von 0,1 bis 10 g/m² lackiert ist, oder
- mit Papier mit einem Flächengewicht von 17 bis 60 g/m² kaschiert ist, oder
- mit einer 5 bis 15 µm dicken Polyesterfolie kaschiert ist.

Auf der zweiten, zur Siegelung gegen ein Blisterbodenteil vorgesehenen Seite ist die Aluminiumfolie mit einer nicht, monoaxial oder biaxial gereckten Kunststofffolie auf der Basis von
- Polyvinylchlorid (PVC) mit einer Foliendicke von 10 bis 40 µm, oder
- Polyvinylidenchlorid (PVDC) mit einer Foliendicke von 10 bis 40 µm, oder
- Polypropylen (PP) mit einer Foliendicke von 6 bis 35 µm, oder
- Polyester mit einer Foliendicke von 5 bis 15 µm, oder
- Polychlortrifluorethylen (PCTFE) mit einer Foliendicke von 8 bis 76 µm, oder
- Cycloolefin-Copolymeren (COC) mit einer Dicke von 10 bis 40 µm kaschiert. Das Aluminium/Kunststoff-Laminat ist durchdrückbar, jedoch erschwert die Kunststofffolie Kindern das Durchbeissen.

## Beschreibung

Die Erfindung betrifft eine Deckfolie für Blisterverpackungen mit thermo- oder kaltgeformten Blisterbodenteilen zur kindersicheren und seniorenfreundlichen Verpackung von pharmazeutischen Produkten.

Um die Anforderungen von Blisterpackungen an Kindersicherheit und Seniorenfreundlichkeit zu erfüllen, werden Deckfolien in der Form von Durchdrück-, Peel- und Peel-Push-Folien in Kombination mit entsprechenden Bodenfolien und Blisterdesign verwendet. Aufgrund unterschiedlicher gesetzgeberischer Vorschriften sind die in einem Land freigegebenen Blisterverpackungen in einem anderen Land nicht ohne weiteres ebenfalls zugelassen.

In den USA müssen alle Blisterverpackungen mit einem neuen Produkt, welches Kindersicherheit und Seniorenfreundlichkeit erfordert, in einem Praxistest geprüft werden. Ein entscheidendes Kriterium ist hier, dass die Kinder im Prüfalter aufgefordert werden, die Blisterpackung in den Mund zu nehmen und darauf zu beissen. Aus diesem Grund werden in den USA Verbundmaterialien mit der Schichtfolge Papier/PET/Aluminium/Heisssiegelschicht als Deckfolien eingesetzt. Da es kaum mehr möglich ist, diese Deckfolie zu durchbeissen, kann das Produkt im Blister aber auch nicht durch Herausdrücken aus der Pakkung entnommen werden. Die Deckfolie ist daher entweder als Peel- oder Peel-Push-Folie konzipiert oder die Blisterpackung ist vom Bodenteil her über Öffnungshilfen aufreissbar. Bedingt durch die beissfeste Ausgestaltung der Deckfolie weisen diese Blisterverpackungen notwendigerweise Kreuzperforationen und versteckte Öffnungshilfen auf. Dies führt zu einer wesentlichen Vergrösserung der Blister im Vergleich zu einer Durchdrückpackung mit einer üblichen Durchdrückfolie. Die Zunahme der Blisterdimensionen von mindestens 3 mm in der Breite und mindestens 12 mm in der Länge führt zu einer geringeren Flächenausbeute und damit zu einer Verkleinerung der Anzahl Blister pro Formtakt bei der Herstellung der Blisterpackungen.

Im Gegensatz zu den USA gibt es in Europa noch keine einheitlichen Vorschriften für kindersichere und seniorenfreundliche Blisterverpackungen. In Deutschland sind die nachstehenden Kombinationen von Deckfolien und Bodenteilen getestet und veröffentlicht worden:

| **Deckfolie** | **Bodenmaterial** |
|---|---|
| 50 g/m² Papier /9 µm Al-Folie / 7 g/m² HSL (Heisssiegellack) | PVC, ACLAR® (PCTFE) |
| Purelay-lid (PE), 70-100 µm (Kreuzperforation) | PP |
| 23 µm PET-Folie / Peelkleber /20 µm Al-Folie / 5,5 g/m² HSL | PP, Formpack®-PP (A)/PP) |
| 40 g/m² Papier / 7 µm AI-Folie / 3,5 g/m² HSL | PP |
| Lack / 30µm Al-Folie, hart, geprägt / 9 g/m² HSL | PVC |
| 50 g/m² Papier /9 µm AI-Folie / 7 g/m² HSL | PVC |
| 35 g/m² Papier / 9 µm Al-Folie / 7 g/m² HSL | PVC |
| Lack / 25 µm AI-Folie / 9 g/m² HSL (Kreuzperforation) | PVC |

Die Prüfung der Durchdrückeigenschaften erfolgt mechanisch. Hierbei wird mit einer definierten Geschwindigkeit ein halbrunder Stempel auf die in eine Halterung eingespannte Folieninnenseite gedrückt. Die zum Durchdrücken erforderliche Kraft wird in Newton angegeben.

Die nachstehenden, in vielen europäischen Ländern eingesetzten Ausführungen von Deckfolien weisen Durchdrückkräfte zwischen 38 und 56 N auf (Standardabweichung ca. 8):

| **Deckfolie** | **Durchdrückkraft [N]** |
|---|---|
| 50 g/m² Papier / 9 µm Al-Folie / 7 g/m² HSL | 48 |
| 40 g/m² Papier / 7 µm Al-Folie / 3,5 g/m² HSL | 41 |
| Schutzlack / 30µm Al-Folie, hart, geprägt /9 g/m² HSL | 56 |
| 35g/m² Papier / 9µm Al-Folie / 7 g/m² HSL | 38 |
| Schutzlack / 25µm Al-Folie / 9 g/m² HSL (Kreuzperforation) | 38 |

Im Gegensatz zu den in den USA geltenden Prüfvorschriften müssen Verpakkungen in Europa nur einmal nach obigem Verfahren geprüft werden und sind dann für alle Produkte generell als kindersicher zugelassen. Im Rahmen eines neuen Gesetzesentwurfs sind jedoch Bestrebungen im Gange, den in den USA obligatorischen Durchbeisstest auch in Europa als ein entscheidendes Kriterium für die Zulassung als kindersichere Verpackung in die Prüfung aufzunehmen. Dies würde für pharmazeutische Unternehmen bedeuten, dass neue Primärpackmittel verwendet werden müssen. Damit sind aber sehr kostenintensive Stabilitätsuntersuchungen verbunden, die Abpackanlagen müssen umgerüstet werden und die Produktivität bei der Blisterherstellung sinkt.

Der Erfindung liegt die Aufgabe zugrunde, eine zur Siegelung gegen alle gängigen Bodenmaterialien geeignete Deckfolie zu schaffen, die ein kindersicheres und seniorenfreundliches Öffnen von Blisterpackungen, einschliesslich Tropenblister, durch Durchdrücken ermöglicht und die auf bestehenden Abpackanlagen ohne Umrüsten eingesetzt werden kann.

Zur erfindungsgemässen Lösung der Aufgabe führt eine 5 bis 30 µm dicke Aluminiumfolie, die auf einer ersten Seite
- unbeschichtet ist, oder
- mit einem Schutzlack mit einem Auftragsgewicht von 0,1 bis 10 g/m² lackiert ist, oder
- mit Papier mit einem Flächengewicht von 17 bis 60 g/m² kaschiert ist, oder
- mit einer 5 bis 15 µm dicken Polyesterfolie kaschiert ist,
und auf der zweiten, zur Siegelung gegen ein Blisterbodenteil vorgesehenen Seite mit einer nicht, monoaxial oder biaxial gereckten Kunststofffolie auf der Basis von
- Polyvinylchlorid (PVC) mit einer Foliendicke von 10 bis 40 µm, oder
- Polyvinylidenchlorid (PVDC) mit einer Foliendicke von 10 bis 40 µm, oder
- Polypropylen (PP) mit einer Foliendicke von 6 bis 35 µm, oder
- Polyester mit einer Foliendicke von 5 bis 15 µm, oder
- Polychlortrifluorethylen (PCTFE) mit einer Foliendicke von 8 bis 76 µm, oder
- Cycloolefin-Copolymeren (COC) mit einer Dicke von 10 bis 40 µm
kaschiert ist.

Das Material der zur Siegelung gegen das Blisterbodenteil vorgesehenen Kunststofffolie wird entsprechend dem Material der zur Siegelung vorgesehenen Seite des Blisterbodenteils gewählt. Damit ist die Kompatibilität der chemischen Struktur der mit dem Füllgut in Kontakt kommenden Seite der erfindungsgemässen Deckfolie mit der chemischen Struktur der mit dem Füllgut in Kontakt kommenden Seite einer bisher verwendeten und zugelassenen Bodenfolie sichergestellt, so dass die Durchführung neuer Stabilitätsuntersuchungen nicht zwingend erforderlich ist.

Die Fertigung der gewünschten Blisterverpackungen mit der erfindungsgemässen Deckfolie kann auf bestehenden Anlagen erfolgen.

Die Aluminiumfolie weist bevorzugt eine Dicke von 7 bis 30 µm auf.

Bevorzugt besteht die Schutzlackschicht auf der ersten Seite der Aluminiumfolie aus einem auf wässrigen oder organischen Lösungsmitteln basierenden Lack auf der Basis von Nitrozellulose, Epoxyharz, Harnstoffharz, Melaminharz, Polyester, Polyurethan oder von Abmischungen der genannten Lackrohstoffe, wobei das bevorzugte Auftragsgewicht der Schutzlackschicht 0,5 bis 5 g/m² beträgt.

Das Papier auf der ersten Seite der Aluminiumfolie kann Pergaminpapier, Pergaminersatzpapier, gestrichenes oder satiniertes Papier mit einem bevorzugten Flächengewicht von 19 bis 50 g/m² sein.

Bevorzugt ist das Papier oder die Polyesterfolie auf der ersten Seite der Aluminiumfolie mit einem wässrigen, einem lösungsmittelbasierten oder einem lösungsmittelfreien Kaschiermittel gegen die Aluminiumfolie kaschiert.

Die Kunststofffolie auf der zweiten Seite der Aluminiumfolie kann mit einem wässrigen, einem lösungsmittelbasierten oder einem lösungsmittelfreien Kaschiermittel oder durch Extrusionskaschieren gegen die Aluminiumfolie kaschiert sein.

Bei einer Blisterverpackung mit einem Blisterbodenteil und einer gegen das Blisterbodenteil gesiegelten erfindungsgemässen Deckfolie besteht das Blisterbodenteil wenigstens auf der gegen die Deckfolie gesiegelten Seite aus einem Material, dessen chemische Struktur mit derjenigen der gegen das Blisterbodenteil gesiegelten Kunststofffolie kompatibel ist. Bevorzugt besteht das Blisterbodenteil wenigstens auf der gegen die Deckfolie gesiegelten Seite aus dem gleichen Material wie die gegen das Blisterbodenteil gesiegelte Kunststofffolie.

Beispiele von zur Herstellung von Blisterbodenteilen verwendeten Materialien sind Folien aus PVC, PVDC, PP, PET, PE und Verbundfolien wie PVC/ACLAR® (PCTFE), PVC/PVDC und COC oder FORMPACK® (AI-AI Blister).

Es sei hier noch erwähnt, dass sowohl die Deckfolie als auch die Bodenfolie bedruckt sein können.

In der nachstehenden Tabelle sind Beispiele von erfindungsgemässen Deckfolien mit zugehöriger Durchdrückkraft zusammengestellt. Mit "Beschichtung aussen" ist die nach aussen, mit "Beschichtung innen" die zur Siegelung gegen das Blisterbodenteil gerichtete Beschichtung der Aluminiumfolie bezeichnet, jeweils unter Angabe des Flächengewichts bei Lack- und bei Papierbeschichtung bzw. der Foliendicke bei Folienbeschichtung und der Verbindungsart zwischen der Beschichtung und der Aluminiumfolie.

| **Beispiel** | **Beschichtung aussen** | **Aluminiumfolie** | **Beschichtung innen** | **Durchdrückkraft [N]** |
|---|---|---|---|---|
| 1 | Schutzlack, 1,0 g/m² lackiert | 20 µm, hart | PVC-Folie, 15 µm lackkaschiert | 44 |
| 2 | Schutzlack, 1,0 g/m² lackiert | 25 µm, weich | PVC-Folie, 25 µm lackkaschiert | 54 |
| 3 | Papier, 21 g/ m² kaschiert | 20 µm, hart | PVC-Folie, 15 µm lackkaschiert | 59 |
| 4 | Schutzlack, 1,0 g/m² lackiert | 20 µm, hart | PVC-Folie, 25 µm lackkaschiert | 61 |
| 5 | Schutzlack, 1,0 g/m² lackiert | 20 µm, hart | PVDC-Folie, 25 µm lackkaschiert | 77 |
| 6 | Schutzlack, 1,0 g/m² lackiert | 20 µm, hart | PVC-Folie, 30 µm lackkaschiert | 105 |
| 7 | Schutzlack, 1,0 g/m² lackiert | 20 µm, hart | PVC-Folie, 40 µm lackkaschiert | 48 |
| 8 | Schutzlack, 1,0 g/m² lackiert | 20 µm, hart | ACLAR®-Folie, 15 µm lackkaschiert | 76 |
| 9 | PET-Folie, 7 µm kaschiert | 9 µm, weich | PET-Folie, 7 µm kaschiert | 94 |
| 10 | Schutzlack, 1,0 g/m² lackiert | 20 µm, hart | monoax. PP-Folie, 30 µm lackkaschiert | 89 |
| 11 | Schutzlack, 1,0 g/m² lackiert | 20 µm, hart | monoax. PP-Folie, 20 µm extrusionskaschiert (7g/m²) | 90 |
| 12 | Schutzlack, 1,0 g/m² lackiert | 25 µm, hart | monoax. PVC-Folie, 35 µm extrusionskaschiert (7g/m²) | 48 |
| 13 | Pergaminpapier, 35 g/m² kaschiert | 9 µm, weich | PVC-Folie, 15 µm lackkaschiert | 20 |
| 14 | Schutzlack, 1,0 g/m² lackiert | 20 µm, hart | COC-Folie, 20 µm lackkaschiert | |

## Patentansprüche

1. Deckfolie für thermo- und kaltgeformte Blister zur kindersicheren und seniorenfreundlichen Verpackung von Medikamenten und medizinischen Produkten, **gekennzeichnet durch**
eine 5 bis 30 µm dicke Aluminiumfolie, die auf einer ersten Seite
- unbeschichtet ist, oder
- mit einem Schutzlack mit einem Auftragsgewicht von 0,1 bis 10 g/m² lakkiert ist, oder
- mit Papier mit einem Flächengewicht von 17 bis 60 g/m² kaschiert ist, oder
- mit einer 5 bis 15 µm dicken Polyesterfolie kaschiert ist,
und auf der zweiten, zur Siegelung gegen ein Blisterbodenteil vorgesehenen Seite mit einer nicht, monoaxial oder biaxial gereckten Kunststofffolie auf der Basis von
- Polyvinylchlorid (PVC) mit einer Foliendicke von 10 bis 40 µm, oder
- Polyvinylidenchlorid (PVDC) mit einer Foliendicke von 10 bis 40 µm, oder
- Polypropylen (PP) mit einer Foliendicke von 6 bis 35 µm, oder
- Polyester mit einer Foliendicke von 5 bis 15 µm, oder
- Polychlortrifluorethylen (PCTFE) mit einer Foliendicke von 8 bis 76 µm, oder
- Cycloolefin-Copolymeren (COC) mit einer Dicke von 10 bis 40 µm
kaschiert ist.

2. Deckfolie nach Anspruch 1, **dadurch gekennzeichnet, dass** die Aluminiumfolie im Zustand weich oder hart ist oder eine definierte Härte aufweist.

3. Deckfolie nach Anspruch 1 oder 2, **dadurch gekennzeichnet, dass** die Aluminiumfolie 7 bis 30 µm dick ist.

4. Deckfolie nach einem der Ansprüche 1 bis 3, **dadurch gekennzeichnet, dass** die Schutzlackschicht auf der ersten Seite der Aluminiumfolie aus einem auf wässrigen oder organischen Lösungsmitteln basierenden Lack auf der Basis von Nitrozellulose, Epoxyharz, Harnstoffharz, Melaminharz, Polyester, Polyurethan oder von Abmischungen der genannten Lackrohstoffe besteht.

5. Deckfolie nach Anspruch 4, **dadurch gekennzeichnet, dass** das Auftragsgewicht der Schutzlackschicht 0,5 bis 5 g/m² beträgt.

6. Deckfolie nach einem der Ansprüche 1 bis 3 **dadurch gekennzeichnet, dass** das Papier auf der ersten Seite der Aluminiumfolie Pergaminpapier, Pergaminersatzpapier, gestrichenes oder satiniertes Papier ist.

7. Deckfolie nach Anspruch 6, **dadurch gekennzeichnet, dass** das Papier ein Flächengewicht von 19 bis 50 g/m² aufweist.

8. Deckfolie nach einem der Ansprüche 1 bis 3, **dadurch gekennzeichnet, dass** das Papier oder die Polyesterfolie auf der ersten Seite der Aluminiumfolie mit einem wässrigen, einem lösungsmittelbasierten oder einem lösungsmittelfreien Kaschiermittel gegen die Aluminiumfolie kaschiert ist.

9. Deckfolie nach einem der Ansprüche 1 bis 8, **dadurch gekennzeichnet, dass** die Kunststofffolie auf der zweiten Seite der Aluminiumfolie mit einem wässrigen, einem lösungsmittelbasierten oder einem lösungsmittelfreien Kaschiermittel oder durch Extrusionskaschieren gegen die Aluminiumfolie kaschiert ist.

10. Blisterverpackung mit einem Blisterbodenteil und einer gegen das Blisterbodenteil gesiegelten Deckfolie, **dadurch gekennzeichnet, dass** die Deckfolie eine 5 bis 30 µm dicke Aluminiumfolie ist, die auf einer ersten Seite
- unbeschichtet ist, oder
- mit einem Schutzlack mit einem Auftragsgewicht von 0,1 bis 10 g/m² lakkiert ist, oder
- mit Papier mit einem Flächengewicht von 17 bis 60 g/m² kaschiert ist, oder
- mit einer 5 bis 15 µm dicken Polyesterfolie kaschiert ist,
und auf der zweiten, gegen das Blisterbodenteil gesiegelten Seite mit einer nicht, monoaxial oder biaxial gereckten Kunststofffolie auf der Basis von
- Polyvinylchlorid (PVC) mit einer Foliendicke von 10 bis 40 µm, oder
- Polyvinylidenchlorid (PVDC) mit einer Foliendicke von 10 bis 40 µm, oder
- Polypropylen (PP) mit einer Foliendicke von 6 bis 35 µm, oder
- Polyester mit einer Foliendicke von 5 bis 15 µm, oder
- Polychlortrifluorethylen (PCTFE) mit einer Foliendicke von 8 bis 76 µm, oder
- Cycloolefin-Copolymeren (COC) mit einer Dicke von 10 bis 40 µm kaschiert ist, und dass das Blisterbodenteil wenigstens auf der gegen die Deckfolie gesiegelten Seite aus einem Material besteht, dessen chemische Struktur mit derjenigen der gegen das Blisterbodenteil gesiegelten Kunststofffolie kompatibel ist.

11. Blisterverpackung nach Anspruch 10, **dadurch gekennzeichnet, dass** das Blisterbodenteil wenigstens auf der gegen die Deckfolie gesiegelten Seite aus dem gleichen Material besteht wie die gegen das Blisterbodenteil gesiegelte Kunststofffolie.

12. Blisterverpackung nach Anspruch 10 oder 11, **dadurch gekennzeichnet, dass** die Aluminiumfolie im Zustand weich oder hart ist oder eine definierte Härte aufweist

13. Blisterverpackung nach einem der Ansprüche 10 bis 12, **dadurch gekennzeichnet, dass** die Aluminiumfolie 7 bis 30 µm dick ist.

14. Blisterverpackung nach einem der Ansprüche 10 bis 13, **dadurch gekennzeichnet, dass** die Schutzlackschicht auf der ersten Seite der Aluminiumfolie aus einem auf wässrigen oder organischen Lösungsmitteln basierenden Lack auf der Basis von Nitrozellulose, Epoxyharz, Harnstoffharz, Melaminharz, Polyester, Polyurethan oder von Abmischungen der genannten Lackrohstoffe besteht.

15. Blisterverpackung nach Anspruch 14, **dadurch gekennzeichnet, dass** das Auftragsgewicht der Schutzlackschicht 0,5 bis 5 g/m² beträgt.

16. Blisterverpackung nach einem der Ansprüche 10 bis 13, **dadurch gekennzeichnet, dass** das Papier auf der ersten Seite der Aluminiumfolie Pergaminpapier, Pergaminersatzpapier, gestrichenes oder satiniertes Papier ist.

17. Blisterverpackung nach Anspruch 16, **dadurch gekennzeichnet, dass** das Papier ein Flächengewicht von 19 bis 50 g/m² aufweist.

18. Blisterverpackung nach einem der Ansprüche 10 bis 13, **dadurch gekennzeichnet, dass** das Papier oder die Polyesterfolie auf der ersten Seite der Aluminiumfolie mit einem wässrigen, einem lösungsmittelbasierten oder einem lösungsmittelfreien Kaschiermittel gegen die Aluminiumfolie kaschiert ist.

19. Blisterverpackung nach einem der Ansprüche 10 bis 18, **dadurch gekennzeichnet, dass** die Kunststofffolie auf der zweiten Seite der Aluminiumfolie mit einem wässrigen, einem lösungsmittelbasierten oder einem lösungsmittelfreien Kaschiermittel oder durch Extrusionskaschieren gegen die Aluminiumfolie kaschiert ist.
